# EUROPEAN PATENT SPECIFICATION

(11) **EP 2 241 842 B1**
(45) Date of publication and mention of the grant of the patent: **15.11.2017**
(21) Application number: 10159944.7
(22) Date of filing: 14.04.2010
(51) Int. Cl.: F24J 2/26

(54) **Heat collector**
Wärmekollektor
Collecteur de chaleur

(30) Priority: 15.04.2009 NL 1036855; 05.08.2009 NL 2003336
(43) Date of publication of application: 20.10.2010
(73) Proprietor: Consolidated Groep B.V., 4207 HB Gorinchem (NL)
(72) Inventor: PUTMAN, Sjaak, 5146 AL, Waalwijk (NL)
(74) Representative: Jilderda, Anne Ayolt

(56) References cited:
- EP-A1- 1 512 922
- WO-A1-00/77459
- WO-A1-2008/128537
- WO-A1-2009/076954
- BE-A6- 1 013 610
- DE-A1- 4 236 603
- DE-U1- 20 022 009
- DE-U1- 20 308 205
- FR-A1- 2 383 280
- FR-A1- 2 777 984
- NL-A- 7 802 886
- NL-C2- 1 009 713
- US-A- 4 269 172
- US-A1- 2006 070 621

## Description

The present invention relates to a heat collector comprising at least one collector panel, comprising a foamed insulating plate body with a main surface on which at least one channel is provided which is open on the main surface, and comprising at least one collector element, comprising a heat-exchanging body which is situated at least partially on the main surface of the insulating plate body and is in heat-exchanging contact with a heat transfer conduit for a heat-carrying medium, the heat transfer conduit being situated at least substantially in the channel, wherein the collector element is arranged under a water barrier layer that is suitable for absorbing heliothermal radiation and is in heat-exchanging contact with the collector element. The invention also relates to a heat-collecting roof system comprising a roof with a roof surface on which a water barrier finishing layer is arranged.
Heat collectors of the type stated in the preamble are applied on considerable scale as heat collector to produce energy in the form of heat from sunlight, and for this reason are also referred to as solar collector. These are often so-called flat plate collectors in the form of a collector panel in which a heat-exchanging body enters into heat-exchanging contact with a heat-carrying medium which is guided through a conduit provided for this purpose. The medium will be heated through thermal contact between the conduit and the heat-exchanging body if a temperature of the heat-exchanging body is higher than that of the medium, and energy transfer thus takes place. Conversely, the medium will relinquish energy to the heat-exchanging body if the temperature of the medium is higher than that of the heat-exchanging body. Such a system can for instance be applied in a closed circuit for more or less active extraction of heat from sunlight for the purpose of then exchanging this heat with a hot water appliance, for instance via a heat exchanger, in order to increase the overall efficiency of the appliance. It is likewise possible to apply such a collector for for instance underground energy storage, wherein groundwater is heated or cooled according to the season and the thus heated or cooled groundwater is stored underground for the rest of the season in order to be pumped up in a subsequent season for heating respectively cooling of a building, such as a house, stable or a climate greenhouse. Such a heat and/or cold recovery can thus be utilized to cool buildings in summer, wherein use is made of the winter cold with which the groundwater has been cooled in winter, and conversely to heat buildings in winter, wherein the summer heat relinquished to the groundwater is utilized efficiently to reduce heating costs in winter.

A collector element for such a heat collector is known from European patent application EP 1.217.315. The known collector element comprises a substantially flat, strip-like heat-exchanging body of aluminium or other suitable metal, which is provided on a visual side with a heliothermal absorption layer in the form of a dark coating. On an opposite back side a heat transfer conduit is connected mechanically to the heat-exchanging body and in heat-exchanging contact therewith, so that heat transfer can take place between the heat-exchanging body and a medium flowing through the heat transfer conduit during operation. For the purpose of a strong sunlight absorption under varying conditions the heat-exchanging body as heliothermal absorption layer comprises an advanced multilayer coating of successively a high-grade metal layer, a layer of chromium oxide and a top layer of a metal oxide, metal nitride or metal fluoride with an efficient refractive index. One or more of such collector elements are usually unified in a closed panel, which is provided on the visual side with a transparent glass cover.

A drawback of many known heat collectors is their relatively high cost price, whereby an economic cost-recovery period thereof is lengthened. Not only are material, transport and production costs a factor here, installation costs also contribute not inconsiderably toward the investment necessary for the purpose. In addition, known collector panels are relatively heavy, which results in a significant roof load when they are incorporated into a roof of a building.

A heat collector of the type described in the preamble is known from European patent application EP 1.512.922. This known heat collector comprises a foamed insulating plate body having on a main surface thereof a series of parallel channels which open on the main surface. Protruding into the channels is a collector element with a corresponding number of hollow groove parts extending therefrom. Extending in the groove parts is a flexible heat transfer conduit which is clamped thereby. Between the groove parts the collector element is substantially plate-like and lies against the main surface under a water barrier layer which has been arranged thereover. During operation a heat-carrying medium flows through the heat transfer conduit in order to take up from the collector element solar heat captured thereby.

Although this known heat collector only produces a small additional load on the roof owing to the application of a self-supporting foamed insulating plate body as a base therefor, this known construction has the drawback that a water-tightness thereof cannot be guaranteed. Due to constantly alternating heating and cooling of the water barrier layer and the collector element thereunder, both these parts will inevitably expand and contract, and in non-uniform manner. It is hereby not possible to prevent the collector element detaching from the insulating plate body and, in the extreme case, pulling loose the water barrier layer, with all the leakage consequences this entails. The known heat collector moreover also requires considerable installation work on site for connection to service pipes, which increases the cost price and again contributes toward the risk of leakage of the whole.

German utility model 200 22 009 U1 is concerned with a heat collector of the type described in the opening_paragraph that comprises an insulating_plate body in which a collector element is arranged under a metal plate.

Dutch patent 1009713 discloses a heat collector comprising an insulating_plate body in which a collector element comprising a heat transfer conduit is arranged under a cover layer. This known collector element does not comprise a heat exchanging body in heat-exchanging contact with a heat transfer conduit.

The present invention has for its object, among others, to provide a heat collector which at least significantly obviates one or more of these drawbacks.

In order to achieve the intended objective, a heat collector of the type described in the preamble has the feature according to the invention that the water barrier layer comprises a flexible watertight cover layer which extends laterally outside the collector element and which is adhered in leakproof manner to the main surface. In this respect an elastomer plastic and/or bitumen is preferably applied for the flexible cover layer.

The heat transfer conduit is enclosed by insulating material in the insulating plate body so that the heat-exchanging body will exchange energy with the medium in the conduit in optimal manner, i.e. with little loss. The nature of the water barrier layer moreover also makes a significant contribution toward a high energy efficiency because it enhances optimal absorption of heliothermal radiation incident thereon. Because the water barrier layer also extends laterally of the collector element over the adjacent part of the main surface of the insulating plate body and is adhered thereto, a fixation of the collector element in the insulating plate body and a watertight sealing of the whole are achieved. On the visual side the water barrier absorption layer thus provides for the desired absorption of incident heat radiation as well as a watertight sealing, whereby despite its relative simplicity and low weight the system is highly suitable as overall finish for outdoor applications. All in all, a relatively lightweight solution can thus be provided while maintaining high energy efficiency and flexibility.

In a preferred embodiment the heat collector according to the invention is characterized in that the collector panel comprises adjacently of the insulating plate body a gutter part with a continuous, at least substantially leakproof cavity for receiving at least one service pipe therein, and that the at least one heat transfer conduit protrudes into the cavity of the gutter part. The collector panel can be realized under fully controlled and conditioned prefabrication conditions together with the service pipes and couplings of the at least one collector element. A considerable part of the installation work, particularly the couplings between successive conduits and/or collector elements, can thus already be arranged and tested for liquid-tightness beforehand in a controlled production environment. The collector panel is thus assembled for at least the greater part as prefab module. Not only does this simplify the installation of a complete collector system on site, the required installation time is moreover reduced significantly. This furthermore contributes toward the operational certainty and reliability of the system and prevents system errors occurring. In the unlikely event of a leakage in the conduit system the leakproof gutter part can moreover function as receptacle and drain so as to thus avoid damage to an underlying construction. The gutter can moreover be embodied and installed such that it can serve as overflow for rainwater for the purpose of supporting an existing rainwater drainage system in the unlikely event of a blockage in this latter.

A particular embodiment of the heat collector has the feature according to the invention that the gutter part comprises a set of side walls on either side of the cavity which extend from a closed bottom and that a removable cover body is connected releasably to the side walls in order to close the cavity on a side remote from the bottom, and more particularly that the side walls and the bottom of the gutter part comprise at least a core of thermal insulation material. The gutter is thus also thermally insulated so that pipe losses from the service pipe are limited, and owing to the removable cover body the conduit ends of the heat transfer conduits remain accessible at all times for visual inspection and possible modification or repair.

If more such collector panels are unified into an overall heat collector system the panels are placed with their gutter parts against each other so as to thus form a total gutter. For accurate and simple leakproof coupling and alignment of the whole, a further particular embodiment of the heat collector according to the invention is characterized in this respect in that the gutter part is provided on at least one end surface with coupling means for an at least substantially leakproof connection to an opposite end surface of a corresponding gutter part of a further collector panel. For the final panel in a thus formed series, a further particular embodiment of the heat collector according to the invention has the feature here that a closing part is connected to the coupling means on the opposite end surface of the gutter part.

Although diverse materials are suitable per se for the water barrier cover layer, a further preferred embodiment of the heat collector according to the invention has the feature that the water barrier layer comprises at least one sheet of a watertight foil, in particular of a roof covering material from a group of bitumen, polyolefin-copolymerisate-bitumen, polyvinyl chloride (PVC) and polymerized ethylene-propylene-diene monomer (EPDM), and preferably one of bitumen with EPDM rubber. This latter material in particular has also proven to be an effective water barrier in more extreme conditions and in an existing roof situation makes a smooth fit, optically and mechanically, with an already present roof covering. With a view to an optimal energy efficiency a further preferred embodiment of the heat collector according to the invention has the feature that the water barrier layer is highly absorbent heliothermally at least on a visual side, is particularly black and more particularly deep black.

A further preferred embodiment of the heat collector has the feature according to the invention that the insulating plate body comprises a number of collector elements on the main surface and that the water barrier layer extends over the number of collector elements. Such a shared covering is not only preferable from a production engineering viewpoint, it moreover results in an aesthetically attractive, optically continuous whole. Because the number of seams is thus limited, this furthermore contributes toward the reliability and durability of the system.

A number of collector elements can be integrated within a collector panel. A particular embodiment of the heat collector according to the invention has the feature here that the insulating plate body comprises on the main surface a number of collector elements laterally separated from each other, and that the water barrier layer extends over the number of collector elements. The lateral division and separation of the individual collector elements here reduces the maximum pull and push caused thereby during heating and cooling of the system, and moreover provides an adhesion base for the water barrier layer on the main surface.

A number of collector panels can moreover be integrated into a total heat-collecting roof system. With a view hereto, a further particular embodiment of the heat collector according to the invention has the feature that the water barrier layer extends flat at least substantially over the whole main surface of the collector panel and protrudes on at least one side outside the collector panel. This protruding part thus provides a flashing of roof covering material which can be employed for a leakproof adhesion to the water barrier layer of an adjacent collector panel. An optically and mechanically continuous roof system in which a heat collector according to the invention is invisibly incorporated can thus be realized in exceptionally simple and reliable manner.

In a further preferred embodiment the heat collector according to the invention has the feature that the heat transfer conduit and the heat-exchanging body are manufactured at least substantially from metal, in particular at least one metal taken from a group of aluminium and copper. The application of metal for both the heat-exchanging body and the conduit connected thereto produces a low heat resistance and provides for an excellent heat transfer. The diameter of the conduit can hereby remain relatively modest while a sufficient degree of heat exchange with the medium is nevertheless possible. This results in short relaxation or response times of the system, which is thereby able to react quickly to temperature differences. In a closed system the total quantity of the medium can moreover be limited, whereby the system is easier to integrate into an existing climate control installation. In addition, metals are characterized by a relatively low thermal expansion coefficient, whereby successive collector elements need only maintain a small intermediate distance and a high degree of coverage can thus be achieved. This also contributes toward a high energy efficiency and operational capacity of the whole.

The heat-exchanging body can be of varying nature and form, although a preferred embodiment of the heat collector according to the invention has the feature that the heat-exchanging body is at least substantially strip-like and is connected in a longitudinal direction in heat-exchanging contact to the heat transfer conduit. The strip-like body has for instance a width of several times a width of the conduit and thus allows integration with the insulating plate body in the same manner as the conduit. A particular embodiment of the heat collector according to the invention moreover has the feature here that the heat transfer conduit protrudes on either side outside the heat-exchanging body. The heat transfer conduit can thus be connected on a first side to a service pipe or a similar collector element, while the conduit can moreover be coupled on an opposite side to a similar, following collector element in longitudinal direction or one situated laterally adjacent thereof.

A further preferred embodiment of the heat collector according to the invention has the feature that the heat transfer conduit comprises at least one U-turn under the heat-exchanging body, and in particular meanders thereunder. The collector element thus forms a relatively large connected whole which lies embedded as independent element in the insulating plate body. In a particular embodiment the heat collector is here further characterized in that the heat transfer conduit protrudes on one side outside the heat-exchanging body. The heat transfer conduit can thus be connected relatively easily at least on said side to for instance a set of service pipes.

Use can be made per se of various thermal insulation materials for the insulating plate body. The heat collector according to the invention is however particularly characterized in this respect in that the insulating plate body is formed at least substantially from a polymer foam, taken particularly from a group of polyurethane foam (PUR), polystyrene foam (PS) and polyisocyanurate foam (PIR). Such polymer foams provide an excellent heat insulation and are moreover relatively lightweight owing to their relatively low density. For the insulating plate body use is particularly made here of an optionally laminated plate material of such a polymer foam of a high density to be able to sufficiently withstand a normal roof load. By avoiding a coating or other type of laminate on the back side, warping of the plate body is prevented when the temperature of the at least one collector element increases on the main surface.

A further particular embodiment of the heat collector according to the invention has the feature that the insulating plate body is resilient at least adjacently of the at least one channel, and that the at least one channel has a width on the main surface which is smaller than a greatest width of the heat transfer conduit held therein. A collector element can thus be pressed with the heat transfer conduit into the channel which, owing to the resilience of the material used, will initially yield to some extent on the surface and then snap around the conduit. The collector element is thus fixed semi-permanently in the insulating plate body.

A significant advantage of the heat collector according to the invention is that it can be extended relatively freely in lateral direction so as to thus enable an existing surface for covering to be filled in particularly efficient manner. In this respect a further particular embodiment of the heat collector according to the invention has the feature that the collector panel comprises a number of successively placed insulating plate bodies, the at least one channels of which lie mutually in line in order to receive therein a collector element with the heat transfer conduit. A sufficient number of insulating plate bodies can thus be successively connected for jointly receiving therein one or more collector elements, which extend here over the full length of the whole.

As well as in a longitudinal direction, the system according to the invention can also be extended in a width direction. A further particular embodiment of the heat collector has for this purpose the feature according to the invention that the collector panel connects laterally to at least one similar connector panel and that the water barrier layer of a collector panel extends partially over at least one adjacent panel.

According to the invention a total collector system can comprise an optimal number of collector panels in both the width and length, which panels are mutually interconnected in order to thus increase the heat-exchanging and overall energy capacity of the whole. The above described heat collector is hereby particularly suitable for roofs. A heat-collecting roof system of the type described in the preamble has in this respect the feature according to the invention that a heat collector as claimed in one or more of the foregoing claims is arranged on the roof surface, optionally with interposing of a vapour control layer, and that the heat collector comprises the water barrier finishing layer. In a preferred embodiment the roof system is characterized here according to the invention in that the roof surface is flat to slightly inclining, with an angle of inclination of a maximum of about 30 degrees.

The invention will be further elucidated hereinbelow on the basis of an exemplary embodiment and an accompanying drawing. In the drawing:
- figure 1: shows a perspective view of a collector element for the purpose of an embodiment of a heat collector according to the invention;
- figure 2: shows a perspective view of an insulating plate body for use with the collector element of figure 1;
- figure 3: shows a perspective view of a collector part of a collector panel assembled from a number of collector elements and collector panels as shown respectively in figures 1 and 2;
- figure 4: shows a cross-section along line IV-IV of the insulating plate body of figure 2;
- figure 5: shows a cross-section along line V-V of the collector part of figure 3;
- figure 6: shows an enlarged detail drawing of the cross-section of figure 5;
- figure 7: shows a perspective view of a prefab collector panel with the collector part of figure 3;
- figure 8: shows a longitudinal section along line VIII-VIII of the collector panel of figure 7;
- figure 9: shows a perspective view of a collector part of a second embodiment of a heat collector according to the invention;
- figure 10: shows the insulating plate body of the collector part of figure 9; and
- figure 11: shows a cross-section of the collector part of figure 9 along line XI-XI.

The figures are otherwise purely schematic and not drawn to scale. Some dimensions in particular may be exaggerated to a greater or lesser extent for the sake of clarity. Corresponding parts are designated as far as possible in the figures with the same reference numeral.

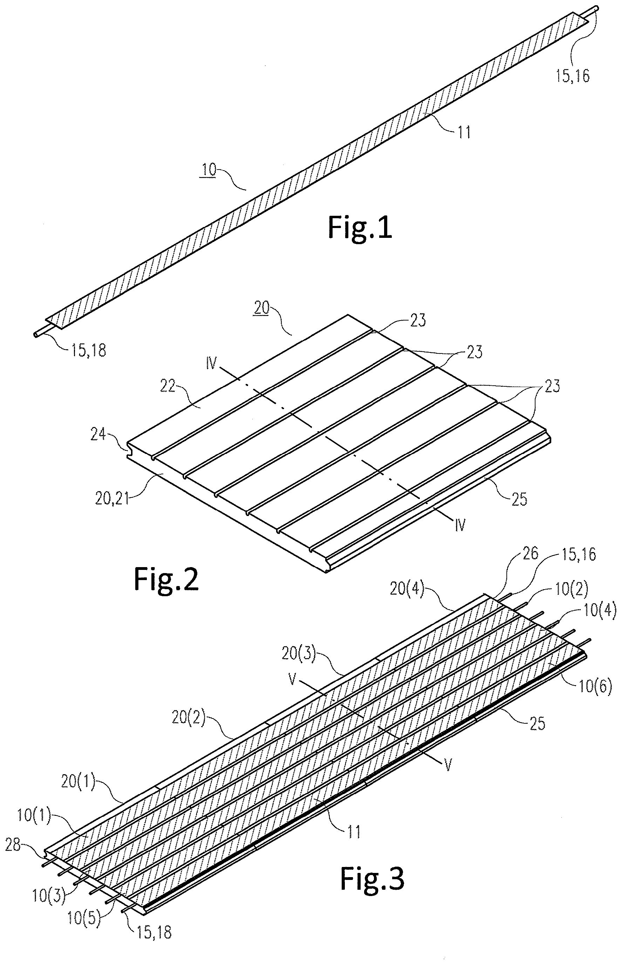

Figure 1 shows a collector element 10 of a first embodiment of a heat collector according to the invention. The collector element comprises in this case a strip-like heat-exchanging body 11 which is able and adapted to carry away captured solar heat or to relinquish heat to a surrounding area. On a back side strip-like body 11 is connected to a heat transfer conduit 15 intended and adapted to transport a heat-carrying medium. Both strip-like heat-exchanging body 11 and heat transfer conduit 15 are manufactured from metal because of their excellent heat-conducting properties. In this example a corrosion-resistant non-ferrous metal such as aluminium or copper is chosen here. Strip-like body 11 is formed specifically in this example from coated aluminium sheet, while use is made of a thin-walled copper conduit for the heat-carrying medium. If desired, the heat transfer conduit can be embodied with a profile or a relief on an inner wall thereof for the purpose of preventing a laminar flow along the inner wall, and precisely for increasing turbulence. The latter contributes further toward a good energetic heat exchange between the conduit on the one hand and the medium flowing therethrough on the other.

Both parts 11,15 of collector element 10 are mutually connected by means of (spot) welding or adhesion, wherein in the latter case use is preferably made of an adhesive with a low heat resistance, for instance due to a significant metallic fraction in the composition thereof. Use is made in this example of a series of spot welds 14 placed closely together which ensure a good heat-exchanging contact between the two parts 11,15.

Owing to the excellent heat-conducting properties of the materials applied in collector elements 10 the heat collector according to the invention can suffice with a relatively small liquid volume and a relatively high flow rate of the medium can be maintained, whereby the system has an exceptionally short relaxation time and is able to respond quickly to temperature fluctuations.

Collector element 10 typically has a length of several to more than ten metres and a width in the order of 5 to 20 centimetres. In this respect use is made in this example of a width of about 15 centimetres by a length of about four metres. Strip-like body 11 is here typically in the order of only several tenths of millimetres to several millimetres thick. According to the desired heat content, heat transfer conduit 15 typically has a diameter in the order of 6 to 15 millimetres. Instead of being formed as individual components, for instance as extrusion profile, heat transfer conduit 15 and heat-exchanging body 11 can optionally also be formed as one integral whole from a suitable metal, such as for instance aluminium, wherein an excellent heat-exchanging contact is ensured ab initio. It is further recommended to round off the corners of the strip-like heat-exchanging body in order to thus protect from leakage the integrity of a water barrier layer to be arranged thereover at a later time. At least the longitudinal edges of the same parts can further be bent substantially perpendicularly downward so as to further protect the water barrier layer herefrom and to anchor the collector elements in a collector panel.

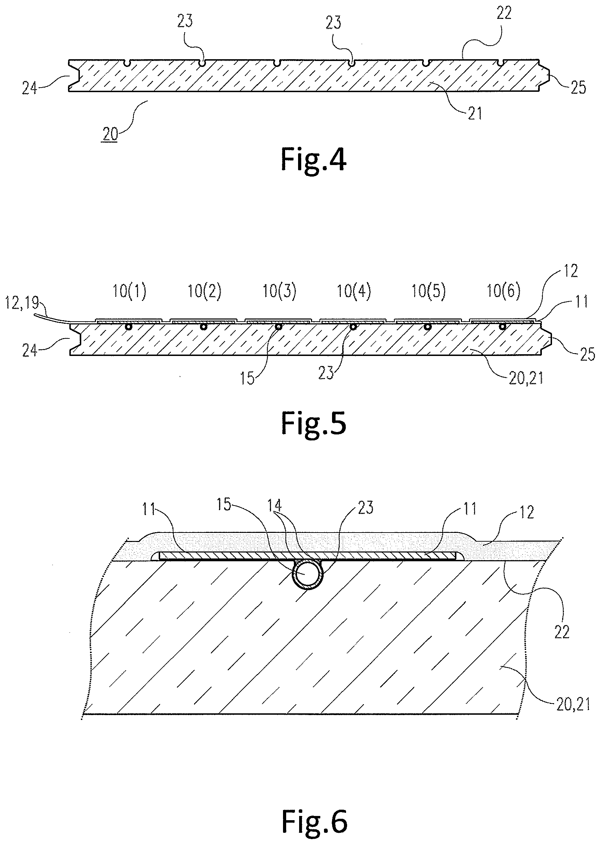

According to the invention the heat collector further comprises a plate-like insulating plate body 20 as shown by way of example in figures 2 and 4. This insulating plate body 20 substantially comprises a foamed core 21 with a thickness in the order of about 5 to 15 centimetres, in this example about 12 centimetres, as according to the desired degree of thermal insulation, which is covered on both sides with a thin plastic foil (not further shown). Use is made in this example of polyisocyanurate foam (PIR) as core material, although polystyrene foam (PS) and polyurethane foam (PUR) are also suitable materials for this application. Use is made in this example of a plate with a width of about 90 centimetres by a length of about one metre for the insulating plate body, although another width and/or length, adapted to a surface for covering, can also be chosen if desired. On a main surface 22 plate material 20 is provided with a series of contour-formed channels 23 in which collector elements of the type shown in figure 1 are fittingly received with their heat transfer conduit 15. The collector elements are here glued into and adhered to insulating plate body 20. Channels 23 are for instance obtained by means of milling and are slightly narrower on main surface 21 than the diameter of heat transfer conduit 15, so that the latter snap into the channels and are then held fast with the freedom to thermally expand and contract. On opposite longitudinal sides the insulating plate body 20 is provided with a tongued profile 25 or grooved profile 24 to enable a number of such collector panels to be combined fitting together to form a full collector if desired.

According to the invention a collector panel comprises one or more insulating plate bodies 20(1..4) which in the case of a plurality can be arranged successively in line in the manner shown in figures 3 and 5, wherein the thus successive channels 23 jointly comprise a collector element 10 with a conduit 15 running therein. Heat transfer conduit 15 of collector element 10 is here at least substantially wholly countersunk and embedded in insulating material 21 of insulating plate body 20, and so adequately thermally insulated. By applying longer or shorter collector panels and combining more or fewer thereof laterally in an overall collector system, it is possible to achieve an optimal coverage of an available heat-collecting surface in almost any specific situation.

On their visual side the absorption bodies 11 of collector elements 10 are provided with a heliothermal absorption layer 12 to enable sunlight to be captured therein or heat to be relinquished to the surrounding area. According to the invention the heliothermal absorption layer 12 comprises a water barrier layer which, while overlapping an adjacent part of the heat-exchanging body, is adhered in leakproof manner to main surface 22 of insulating plate body 20. Use can be made for this purpose of separate strips of a suitable water barrier composition and thickness which are individually connected in leakproof manner to insulating plate body 20 on either side of a collector element. Use is however advantageously made in this example of a continuous shared water barrier layer which has been arranged at least substantially over the whole main surface, see figures 5-7. For water barrier layer 12 use is made in this respect of a dark, preferably (deep) black EPDM roof covering. This is a combination of bitumen and EPDM rubber. This layer is glued, fused or otherwise adhered to strip-like body 11 and the free part of main surface 22 of insulating plate body 20, and has a layer thickness of between 1 and 2.5 millimetres. If desired, another roof covering material, such as polyvinylchloride or bitumen, can otherwise also be applied for water barrier layer 12.

These roof covering materials are generally available in varying thicknesses on a roll and combine excellent water barrier properties with a high heliothermally absorbing and adequate heat-transporting capacity. Use is made in this example of a roll width of about 100 or 110 centimetres, so that a free strip of about 10 centimetres remains laterally and on an end surface per insulating plate body 20 of 90 centimetres wide, and on site can be folded over an adjacent collector panel as flashing and adhered conventionally in leakproof manner.

Owing to its sublime heat-absorbing capacity the water barrier top layer 12 contributes not inconsiderably toward the heat-collecting efficiency of collector panel 10, which heat can be exchanged via heat-exchanging body 11 with a heat-carrying medium flowing through heat transfer conduit 15 during operation. For this medium use is generally made of pure water, although use can also be made of other liquids such as for instance an oil, and additives can optionally be added to the water, such as particularly an antifreeze agent such as glycol. By making use, as in this example, of a continuous water barrier top layer 12 which falls jointly over all collector elements 10, an aesthetically attractive, continuous whole is obtained in which the individual collector elements will not be discernible, or hardly so.

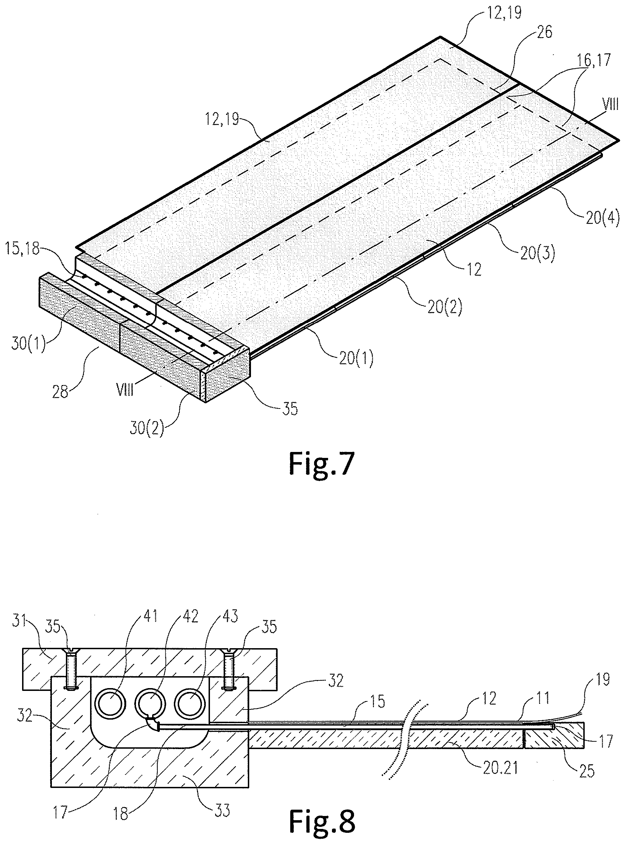

On a distal end surface 26 the distal conduit ends 16 are mutually interconnected by means of conventional squeeze or solder couplings 17, see figure 7. By making use of an even number of collector elements, as in this example, this always provides a whole number of pairs of respectively a feed and return conduit which, in accordance with the so-called Tichelman connecting principle presumed known to the skilled person, can for instance be coupled to three service pipes 41..43, see also figure 8.

At a proximal end surface 28 a gutter part 30 is provided on the collector parts which provides space for these service pipes 41..43 and which can be closed off with a cover body adapted thereto, such as cover 31 shown in figure 8. Conduits 15 of collector elements 10 here protrude with a proximal free outer end 18 into gutter part 30 for later coupling to such a service pipe 41..43 by means of a conventional squeeze coupling 17. Cover 31 is closed by means of rapid-action closing means, such as plastic screws or bayonets 35, onto a top side of gutter parts 30 and can therefore be easily removed manually without damage so as to allow at all times a later inspection or repair of pipes 41..43 and the connections made thereto.

Gutter parts 30 are prefabricated from for instance polyester, another suitable plastic or preserved steel, wherein both cover 31, walls 32 and bottom 33 are thermally insulated since the same or similar insulating foam plate material is applied therefor as for insulating plate bodies 20. Thermal losses via the gutter parts can thus be limited effectively. The gutter parts have a fully watertight finish in order to collect and stem any leakage of a conduit system received or debouching therein.

The collector panel 10 shown in figure 7 with gutter part 30 formed thereon forms a prefab element which is easily processed and which can be fully preassembled and tested beforehand under conditioned and controlled conditions. For a total collector system a desired number of such collector panels of a length adapted to a specific situation are combined up to a width adapted to this specific situation. This is illustrated in figure 7 for only two panels, but both the width and length can be extended further as required. Gutter parts 30 here lie mutually in line and thus form a total gutter which provides space for shared service pipes 40,41, see figure 8, for a central feed and discharge of a heat-carrying medium.

A complete collecting roof system can thus be delivered in relatively short (installation) time and with relatively little on-site installation work. For this purpose a watertight and relatively vapour-tight roof covering is arranged as vapour barrier or vapour-regulating layer on an available surface or slightly inclining roof surface under the collector system The prefab collector panels of the heat collector are adhered or fixed mechanically to the vapour barrier layer. The water barrier layer of the heat collector according to the invention is the final watertight finishing layer of the roof surface. This layer thus functions as water barrier as well as for heat absorption or heat emission. Because the water barrier layer can be formed from a normal, dark, preferably black roof covering material, the collector system can thus be incorporated almost invisibly in a roof system. The installation thereof lies wholly within the skill and the normal expertise of roofers so that no specially trained personnel is required for the purpose. For the insulating plate bodies of the collector system use is preferably made of a polymer foam of a high density so that it is possible to walk normally on the system.

The gutter assembled from gutter parts 30 can be placed at a highest point so that service pipes and collecting conduits can be vented therefrom in simple manner. Although not further shown, the gutter parts can here be provided on their end surfaces with coupling means such as protrusions and cavities corresponding thereto for the purpose of enhancing a mutual alignment and a mutual connection of the whole. A free end surface of the final element is closed using an insulated end cover 35, which can in this case engage and co-act in similar manner with the same coupling means.

A separate closing part 25, for instance of the same material as that of insulating bodies 20, is placed over distal connections 16,17 of conduits 15, see figure 8. Closing part 25 comprises for this purpose cavities at the position of connections 16,17 for fittingly receiving the connections therein. On this side top layer 12 extends with a free flap 19, which is later adhered on site to closing part 25 to form an optically continuous whole. This side of the collector is thus also finished neatly and protected from weather influences and other external factors.

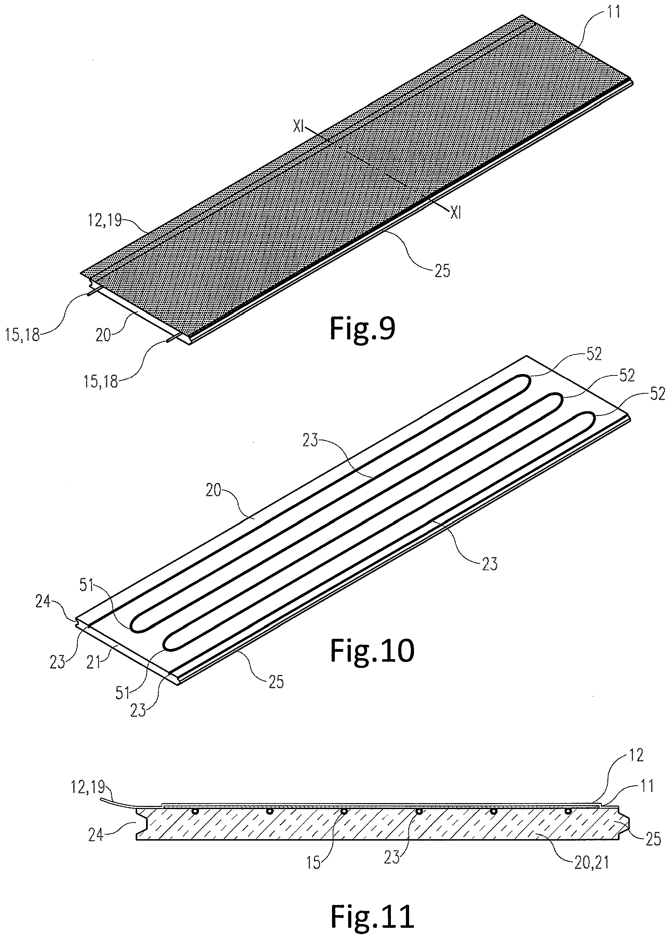

A collector part of a second exemplary embodiment of a heat collector according to the invention is shown in figures 9-11. The collector part is combined with a gutter part 30 and service pipes in similar manner as in the above described example, the content of which should be deemed as cited and included herein, unless expressly stated otherwise below.

Other than in the first exemplary embodiment, the collector part does not comprise a number of mutually adjacent, more or less separate collector elements, but instead a single collector element 10 with a plate-like heat-exchanging body 11 extending over substantially a whole surface of an insulating plate body lying thereunder. Insulating plate body 20 can herein be manufactured integrally, as here, or, as in the first exemplary embodiment, be assembled from successively placed individual parts. Arranged on a main surface of the insulating plate body is a continuous channel 23 which meanders over the surface between U-turns 51,52 in order to receive fittingly therein a similarly formed heat transfer conduit 15 of the collector element. In this example use is also made for this purpose of a copper conduit with a diameter in the order of 8-15 millimetres, in this case about 10 millimetres.

The dense insulating foamed core material 21 of insulating plate body 20 also ensures in this case an excellent thermal insulation of the heat transfer conduit 15 thus substantially wholly enclosed thereby. Only at a proximal end surface does conduit 15 protrude with two proximal outer ends 18 outside the insulating plate body. The collector element can be connected therewith to service pipes for respectively feed and discharge of a heat-carrying medium, or optionally be laterally connected to a corresponding proximal outer end of an adjacent, similar collector part with which it is placed in series. In the latter case a tongue and groove profile 24,25 provides, together with overhang 19 of bituminous water barrier top layer 12, for a substantially imperceptible lateral connection and extensibility of the whole.

The length and width of the individual collector panels and a collector assembled therefrom can be freely adjusted within determined limits to an available surface to be covered therewith. These limits will be defined mainly from a viewpoint of logistics and transport. In the shown example use is typically made of a panel width of about 90 centimetres and a length in the order of 2-8 metres. This significantly greater panel length compared to the foregoing exemplary embodiment is required because the connections of the panel are situated on one side only, whereby the panel shown here is not suitable for interconnection of successive collector elements in a longitudinal direction. On the other hand however, the number of connections and couplings of conduits and collector elements can be kept considerably more limited in the present exemplary embodiment, which reduces the chance of leakage and saves assembly time and material.

Although the invention has been further elucidated with reference to only several exemplary embodiments, it will be apparent that the invention should in no way be deemed limited thereto. On the contrary, many other variations and embodiments are possible within the scope of the invention for the person with ordinary skill in the art. It is thus also possible in the second exemplary embodiment to opt for instance for three collector elements instead of one collector element, these elements each carrying a heat transfer conduit with only one U-turn. The individual collector elements can in this case be mutually coupled in the gutter part or be connected to a service pipe.

Although the described collector system is described mainly as a system which collects heliothermal heat in summer and during the day and transfers it to the medium being carried through the heat transfer conduit, the system is however also suitable for collecting cold in winter and during the night and transferring it to the medium for the purpose of (underground) storage for use at a later time, for instance to support a climate control installation in summer or during the day.

## Claims

1. Heat collector, comprising at least one collector panel comprising a foamed insulating plate body (20) with a main surface (22) on which at least one channel (23) is provided which is open on the main surface, and comprising at least one collector element (10), comprising a heat-exchanging body (11) which is situated at least partially on the main surface (22) of the insulating plate body (20) and is in heat-exchanging contact with a heat transfer conduit (15) for a heat-carrying medium, the heat transfer conduit (15) being situated at least substantially in the channel (23), wherein the collector element (10) is arranged under a water barrier layer (12) that is suitable for absorbing heliothermal radiation and is adhered in heat-exchanging contact to the heat exchanging body (11), **characterized in that** the water barrier layer (12) comprises a flexible watertight cover layer which extends laterally outside the collector element (10) and which is adhered in leakproof manner to the main surface (22).

2. Heat collector as claimed in claim 1, **characterized in that** the collector panel comprises adjacently of the insulating plate body (20) a gutter part (30) with a continuous, at least substantially leakproof cavity for receiving at least one service pipe (41,42,43) therein, and that the at least one heat transfer conduit (15) protrudes into the cavity of the gutter part (30).

3. Heat collector as claimed in claim 2, **characterized in that** the gutter part (30) comprises a set of side walls (32) on either side of the cavity which extend from a closed bottom (33) and that a removable cover body (31) is connected releasably to the side walls (32) in order to close the cavity on a side remote from the bottom (33).

4. Heat collector as claimed in claim 3, **characterized in that** the side walls (32) and the bottom (33) of the gutter part (30) comprise at least a core of thermal insulation material.

5. Heat collector as claimed in claim 2, 3 or 4, **characterized in that** the gutter part (30) is provided on at least one end surface with coupling means for an at least substantially leakproof connection to an opposite end surface of a corresponding gutter part (30) of a further collector panel.

6. Heat collector as claimed in claim 5, **characterized in that** a closing part is connected to the coupling means on the opposite end surface of the gutter part (30).

7. Heat collector as claimed in one or more of the foregoing claims, **characterized in that** the water barrier layer (12) comprises at least one sheet of a watertight roof covering foil, in particular of a roof covering material from a group of bitumen, polyolefin-copolymerisate-bitumen, polyvinyl chloride (PVC) and polymerized ethylene-propylene-diene monomer (EPDM), and preferably one of bitumen in combination with EPDM rubber.

8. Heat collector as claimed in claim 7, **characterized in that** the water barrier layer (12) is highly absorbent heliothermally at least on a visual side, is particularly black and more particularly deep black.

9. Heat collector as claimed in one or more of the foregoing claims, **characterized in that** the insulating plate body (20) comprises on the main surface (22) a number of collector elements laterally separated from each other, and that the water barrier layer (12) extends over the number of collector elements.

10. Heat collector as claimed in one or more of the foregoing claims, **characterized in that** the water barrier layer (12) extends flat at least substantially over the whole main surface (22) of the collector panel and protrudes on at least one side outside the collector panel.

11. Heat collector as claimed in one or more of the foregoing claims, **characterized in that** the heat transfer conduit (15) and the heat-exchanging body (11) are manufactured at least substantially from metal, in particular at least one metal taken from a group of aluminium and copper.

12. Heat collector as claimed in one or more of the foregoing claims, **characterized in that** the heat-exchanging body (11) is at least substantially strip-like and is connected in a longitudinal direction in heat-exchanging contact to the heat transfer conduit (15).

13. Heat collector as claimed in claim 12, **characterized in that** the heat transfer conduit (15) protrudes on either side outside the heat-exchanging body (11).

14. Heat collector as claimed in claim 12 or 13, **characterized in that** the heat transfer conduit (15) comprises at least one U-turn under the heat-exchanging body (11), and in particular meanders thereunder.

15. Heat collector as claimed in one or more of the foregoing claims, **characterized in that** the insulating plate body (20) comprises a polymer foam, taken particularly from a group of polyurethane foam (PUR), polystyrene foam (PS) and polyisocyanurate foam (PIR).

16. Heat collector as claimed in one or more of the foregoing claims, **characterized in that** the insulating plate body (20) is resilient at least adjacently of the at least one channel, and that the at least one channel (23) has a width on the main surface (22) which is smaller than a greatest width of the heat transfer conduit (15) held therein.

17. Heat collector as claimed in one or more of the foregoing claims, **characterized in that** the collector panel comprises a number of successively placed insulating plate bodies (20), the at least one channels of which lie mutually in line in order to receive therein a shared collector element (10) with the heat transfer conduit (15) .

18. Heat collector as claimed in one or more of the foregoing claims, **characterized in that** the collector panel connects laterally to at least one similar connector panel and that the water barrier layer (12) of a collector panel extends partially over at least one adjacent panel.

19. Heat collector as claimed in one or more of the foregoing claims, **characterized in that** the collector panel comprises a number of collector elements which are mutually interconnected and coupled to at least one shared service pipe (41,42,43).

20. Heat-collecting roof system comprising a roof with a roof surface on which a water barrier finishing layer is arranged, **characterized in that** a heat collector as claimed in one or more of the foregoing claims is arranged on the roof surface, optionally with interposing of a vapour control layer, and that the heat collector comprises the water barrier finishing layer.

21. Heat-collecting roof system as claimed in claim 20, **characterized in that** the roof surface is flat to slightly inclining, with an angle of inclination of a maximum of about 30 degrees.

## Patentansprüche

1. Wärmekollektor umfassend wenigstens eine Kollektortafel die einen geschäumten Insolationsgrundkörper (20) mit einer Hauptfläche (22) aufweist, an der wenigstens ein Kanal (23) ausgespart ist und an der Hauptfläche (22) geöffnet ist, umfassend wenigstens ein Kollektorelement (10), einen Wärmeaustauschkörper (11) der wenigstens teilweise in die Hauptfläche (22) des Isolationsgrundkörpers (20) eingelassen ist und der mittels eines Wärmespeichernden Fluides und einem Wärmeleitungsrohr (15) in einem Wärmeaustauschkontakt steht und das Wärmeleitungsrohr (15) wenigstens wesentlich in dem Kanal (23) verläuft, worin das Kollektorelement (10) unter einer wasserdichten Schicht (12) zur Absorption von solarthermischer Strahlung angeordnet ist und in einem Wärmeaustauschkontakt zu dem Wärmeaustauschkörper (11) angeordnet ist, **dadurch gekennzeichnet, dass** die wasserdichte Schicht (12) eine flexible wasserdichte Schicht aufweist die sich an dem Kollektorelement (10) seitlich außerhalb erstreckt und wasserdicht mit der Hauptfläche (22) verbunden ist.

2. Wärmekollektor nach Anspruch 1, **dadurch gekennzeichnet, dass** die Kollektortafel seitlich am Insolationsgrundkörper (20) eine Rinne (30) aufweist, in ihrem Hohlraum wasserdicht ist und wenigstens eine Versorgungsleitung (41, 42, 43) darin aufnehmen kann, und wenigstens ein Wärmeleitungsrohr (15) in die seitlich angeordnete Rinne (30) hineinragt.

3. Wärmekollektor nach Anspruch 2, **dadurch gekennzeichnet, dass** die Rinne (30) ein paar Seitenwände (32) umfasst, die sich von einem geschlossenen Boden (33) erstrecken, eine abnehmbare Abdeckplatte (31) löslich mit den Seitenwänden (32) verbunden ist, um die in der Rinne verlaufenden Hohlraum auf einer vom Boden (33) abgewandten Seite zu schließen.

4. Wärmekollektor nach Anspruch 3, **dadurch gekennzeichnet, dass** die Seitenwände (32) und der Boden (33) der Rinne (30) wenigstens ein Innenteil aus thermischen Insolationsmaterial aufweisen.

5. Wärmekollektor nach Anspruch 2, 3 oder 4, **dadurch gekennzeichnet, dass** die Rinne (30) an mindestens einer Stirnfläche mit Kupplungen für eine im Wesentlichen dichte Verbindung mit einer gegenüberliegenden Stirnfläche einer entsprechenden Rinne (30) einer weiteren Kollektortafel versehen ist.

6. Wärmekollektor nach Anspruch 5, **dadurch gekennzeichnet, dass** an der gegenüberliegenden Stirnfläche der Rinne (30) ein Verschlußteil mit der Kupplung verbunden ist.

7. Wärmekollektor nach einem der vorhergehenden Ansprüche, **dadurch gekennzeichnet, dass** die wasserdichte Schicht (12) mindestens eine Folie aus einer wasserdichten Dachabdeckfolie, insbesondere aus einem Dachabdeckungsmaterial aus einer Gruppe von Bitumen, Polyolefin-Copolymerisat-Bitumen, Polyvinylchlorid (PVC) und polymerisiertem Ethylen-Propylen-Dien-Monomer (EPDM) und vorzugsweise aus Bitumen in Kombination mit EPDM-Kautschuk besteht.

8. Wärmekollektor nach Anspruch 7, **dadurch gekennzeichnet, dass** die wasserdichte Schicht (12) auf einer nach oben gerichteten, betrachtbaren Seite hoch absorbierend, besonders schwarz und/oder tiefschwarz ist.

9. Wärmekollektor nach einem oder mehreren der vorhergehenden Ansprüche, **dadurch gekennzeichnet, dass** der Insolationsgrundkörper (20) auf der Hauptfläche (22) eine Summe von seitlich voneinander getrennten Kollektorelementen aufweist und dass die wasserdichte Schicht (12) über die Summe der Kollektorelemente verläuft.

10. Wärmekollektor nach einem oder mehreren der vorhergehenden Ansprüche, **dadurch gekennzeichnet, dass** die wasserdichte Schicht (12) zumindest im Wesentlichen über die gesamte Hauptfläche (22) der Kollektortafel flach verläuft und auf mindestens einer Seite der Kollektortafel hervor ragt.

11. Wärmekollektor nach einem oder mehreren der vorhergehenden Ansprüche, **dadurch gekennzeichnet, dass** das Wärmeleitungsrohr (15) und der Wärmeaustauschkörper (11) zumindest im Wesentlichen aus Metall, insbesondere aus einer Gruppe von Aluminium und Kupfer hergestellt sind.

12. Wärmekollektor nach einem oder mehreren der vorhergehenden Ansprüche, **dadurch gekennzeichnet, dass** der Wärmeaustauschkörper (11) zumindest im Wesentlichen streifenförmig ist und in Längsrichtung in Wärmeaustauschkontakt mit einem Wärmeleitungsrohr (15) verbunden ist.

13. Wärmekollektor nach Anspruch 12, **dadurch gekennzeichnet, dass** das Wärmeleitungsrohr (15) beidseitig außerhalb des Wärmeaustauschkörpers (11) vorsteht.

14. Wärmekollektor nach Anspruch 12 oder 13, **dadurch gekennzeichnet, dass** das Wärmeleitungsrohr (15) mindestens eine Umkehrung um 180° unter dem Wärmeaustauschkörper (11) aufweist und insbesondere darunter in Schlangenlinien verläuft.

15. Wärmekollektor nach einem oder mehreren der vorhergehenden Ansprüche, **dadurch gekennzeichnet, dass** der Isolationsgrundkörpers (20) einen Polymerschaumstoff aufweist, der insbesondere aus einer Gruppe von Polyurethanschaum (PUR), Polystyrolschaum (PS) und Polyisocyanuratschaum (PIR) besteht.

16. Wärmekollektor nach einem oder mehreren der vorhergehenden Ansprüche, **dadurch gekennzeichnet, dass** der Isolationsgrundkörpers (20) elastisch zum benachbarten Kanal anliegt, und dass der mindestens eine Kanal (23) einen Querschnitt zur Hauptfläche (22) aufweist, der kleiner ist als der größte Querschnitt der darin gehaltenen Wärmeleitungsrohre (15).

17. Wärmekollektor nach einem oder mehreren der vorhergehenden Ansprüche, **dadurch gekennzeichnet, dass** die Kollektortafel eine Anzahl von nacheinander angeordneten Isolationsgrundkörper (20) umfasst, wobei die mindestens einen Kanäle gemeinsam in einer Linie liegen, um darin ein Kollektorelement (10) mit den Wärmeleitungsrohren (15) aufzunehmen.

18. Wärmekollektor nach einem oder mehreren der vorhergehenden Ansprüche, **dadurch gekennzeichnet, dass** die Kollektortafel seitlich mit mindestens einer gleichen Anschlussplatte verbunden ist und dass sich die wasserdichte Schicht (12) einer Kollektortafel teilweise über mindestens eine anliegende Tafel erstreckt.

19. Wärmekollektor nach einem oder mehreren der vorhergehenden Ansprüche, **dadurch gekennzeichnet, dass** die Kollektortafel eine Anzahl von Kollektorelementen umfasst, die miteinander verbunden und mit mindestens einer gemeinsamen Versorgungsleitung (41, 42, 43) gekoppelt sind.

20. Wärmekollektordachsystem mit einem Dach und einer Dachfläche, auf der eine wasserdichte Endschicht angeordnet ist, **dadurch gekennzeichnet, dass** ein Wärmekollektor nach einem oder mehreren der vorhergehenden Ansprüche auf der Dachfläche, optional unter Zwischenschaltung einer Dampfsperre, angeordnet ist, und dass der Wärmekollektor die wasserdichte Endschicht umfasst.

21. Wärmekollektordachsystem nach Anspruch 20, **dadurch gekennzeichnet, dass** die Dachfläche flach bis leicht geneigt ist, in einem Neigungswinkel von maximal etwa 30 Grad.

## Revendications

1. Collecteur de chaleur, comprenant au moins un panneau collecteur de chaleur comprenant une plaque isolante en mousse (20) dotée d'une surface principale (22) équipée d'au moins un canal (23) ouvert, et comprenant au moins un élément collecteur (10), comprenant un corps échangeur de chaleur (11) qui est situé au moins en partie sur la surface principale (22) de la plaque isolante (20) et est en contact d'échange thermique avec un conduit de transfert de chaleur (15) aux fins de transport thermique, le conduit de transfert de chaleur (15) étant situé au moins substantiellement dans le canal (23), l'élément collecteur (10) étant installé sous une couche imperméable à l'eau (12) qui est conçue pour absorber des rayons héliothermiques et adhère au corps échangeur de chaleur (11) de manière à être en contact d'échange thermique, **caractérisé en ce que** la couche imperméable à l'eau (12) comprend une couche de couverture souple étanche à l'eau qui s'étend latéralement à l'extérieur de l'élément collecteur (10) et qui adhère de manière étanche à la surface principale (22).

2. Collecteur de chaleur selon la revendication 1, **caractérisé en ce que** le panneau collecteur comprend, attenant à la plaque isolante (20), une partie formant une gouttière (30) avec une cavité continue, au moins substantiellement étanche pour recevoir au moins un tuyau de service (41, 42, 43), et **en ce que** le conduit de transfert de chaleur (15) dépasse dans la cavité de la partie formant une gouttière (30).

3. Collecteur de chaleur selon la revendication 2, **caractérisé en ce que** la partie formant une gouttière (30) comprend un ensemble de parois latérales (32) de part et d'autre de la cavité qui partent d'un fond fermé (33) et **en ce qu'**un corps de couverture amovible (31) est rattaché de manière séparable aux parois latérales (32) afin de fermer la cavité sur un côté éloigné du fond (33).

4. Collecteur de chaleur selon la revendication 3, **caractérisé en ce que** les parois latérales (32) et le fond (33) de la partie formant une gouttière (30) comprennent au moins un noyau de matériau d'isolation thermique.

5. Collecteur de chaleur selon la revendication 2, 3 ou 4, **caractérisé en ce que** la partie formant une gouttière (30) est installée sur au moins une surface d'extrémité avec des moyens de couplage à des fins de raccordement au moins substantiellement étanche à une surface d'extrémité opposée d'une partie formant une gouttière correspondante (30) d'un autre panneau collecteur.

6. Collecteur de chaleur selon la revendication 5, **caractérisé en ce qu'**une pièce de fermeture est rattachée aux moyens de couplage sur la surface d'extrémité opposée de la partie formant une gouttière (30).

7. Collecteur de chaleur selon une ou plusieurs des revendications précédentes, **caractérisé en ce que** la couche imperméable à l'eau (12) comprend au moins une couche d'un film de couverture de toiture étanche à l'eau, en particulier faite d'un matériau de couverture de toiture appartenant à un groupe constitué de bitume, d'un alliage copolymérisat de polyoléfines-bitume, de chlorure de polyvinyle (PVC) et d'éthylène-propylène-diène-monomère (EPDM) polymérisé, et de préférence d'un matériau en bitume associé à un caoutchouc EPDM.

8. Collecteur de chaleur selon la revendication 7, **caractérisé en ce que** la couche imperméable à l'eau (12) est hautement absorbante sur le plan héliothermique au moins du point de vue visuel, est en particulier noire et plus particulièrement d'un noir profond.

9. Collecteur de chaleur selon une ou plusieurs des revendications précédentes, **caractérisé en ce que** la plaque isolante (20) comprend sur sa surface principale (22) plusieurs éléments collecteurs séparés latéralement les uns des autres, et **en ce que** la couche imperméable à l'eau (12) s'étend par-dessus les éléments collecteurs.

10. Collecteur de chaleur selon une ou plusieurs des revendications précédentes, **caractérisé en ce que** la couche imperméable à l'eau (12) s'étend à plat au moins substantiellement par-dessus la totalité de la surface principale (22) du panneau collecteur et dépasse sur au moins un côté à l'extérieur du panneau collecteur.

11. Collecteur de chaleur selon une ou plusieurs des revendications précédentes, **caractérisé en ce que** le conduit de transfert de chaleur (15) et le corps échangeur de chaleur (11) sont fabriqués au moins substantiellement à partir de métal, en particulier au moins un métal appartenant à un groupe constitué d'aluminium et de cuivre.

12. Collecteur de chaleur selon une ou plusieurs des revendications précédentes, **caractérisé en ce que** le corps échangeur de chaleur (11) est au moins substantiellement en forme de bande et est rattaché dans le sens de la longueur en contact d'échange thermique au conduit de transfert de chaleur (15).

13. Collecteur de chaleur selon la revendication 12, **caractérisé en ce que** le conduit de transfert de chaleur (15) dépasse de part et d'autre de l'extérieur du corps échangeur de chaleur (11).

14. Collecteur de chaleur selon la revendication 12 ou 13, **caractérisé en ce que** le conduit de transfert de chaleur (15) comprend au moins une courbe à 180 degrés sous le corps échangeur de chaleur (11), et en particulier serpente dessous.

15. Collecteur de chaleur selon une ou plusieurs des revendications précédentes, **caractérisé en ce que** la plaque isolante (20) comprend une mousse polymère, appartenant en particulier à un groupe constitué de mousse polyuréthane (PUR), de mousse polystyrène (PS) et de mousse de polyisocyanurate (PIR).

16. Collecteur de chaleur selon une ou plusieurs des revendications précédentes, **caractérisé en ce que** la plaque isolante (20) est fixée au moins de manière adjacente au canal, et **en ce que** le canal (23) a une largeur sur la surface principale (22) qui est inférieure à la plus grande largeur du conduit de transfert de chaleur (15) qui y est maintenu.

17. Collecteur de chaleur selon une ou plusieurs des revendications précédentes, **caractérisé en ce que** le panneau collecteur comprend plusieurs plaques isolantes placées les unes à la suite des autres (20), dont les canaux reposent en ligne les uns à côté des autres afin de recevoir un élément collecteur commun (10) avec le conduit de transfert de chaleur (15).

18. Collecteur de chaleur selon une ou plusieurs des revendications précédentes, **caractérisé en ce que** le panneau collecteur est rattaché latéralement à au moins un panneau collecteur similaire et **en ce que** la couche imperméable à l'eau (12) d'un panneau collecteur s'étend au moins partiellement sur au moins un panneau adjacent.

19. Collecteur de chaleur selon une ou plusieurs des revendications précédentes, **caractérisé en ce que** le panneau collecteur comprend plusieurs éléments collecteurs qui sont rattachés les uns aux autres et couplés à au moins un tuyau de service commun (41, 42, 43).

20. Système de toit collecteur de chaleur comprenant un toit dont une surface est dotée d'une couche de finition imperméable à l'eau, **caractérisé en ce que** le collecteur de chaleur selon une ou plusieurs des revendications précédentes est installé sur la surface du toit, avec en option l'interposition d'une couche de contrôle de la vapeur, et **en ce que** le collecteur de chaleur comprend la couche de finition imperméable à l'eau.

21. Système de toit collecteur de chaleur selon la revendication 20, **caractérisé en ce que** la surface du toit est plane à légèrement inclinée, avec un angle d'inclinaison de 30 degrés maximum.
